# EUROPEAN PATENT SPECIFICATION

(11) **EP 3 585 759 B1**
(45) Date of publication and mention of the grant of the patent: **12.01.2022**
(21) Application number: 18706521.4
(22) Date of filing: 23.02.2018
(51) Int. Cl.: C05G 3/90, C05G 5/20, C05C 9/00

(54) **LIQUID UREASE INHIBITOR FORMULATIONS**
FLÜSSIGE UREASEHEMMENDE FORMULIERUNGEN
FORMULATIONS D'INHIBITEURS D'URÉASE LIQUIDE

(30) Priority: 24.02.2017 WO PCT/EP2017/054397; 23.08.2017 EP 17187558
(43) Date of publication of application: 01.01.2020
(73) Proprietor: Yara International ASA, 0277 Oslo (NO)
(72) Inventor: COLPAERT, Filip, B-9052 Zwijnaarde (BE); VAN BELZEN, Ruud, 4331 CA Middelburg (NL); DONKERS, Ellen Henrica Diana, 4533 HS Terneuzen (NL)
(74) Representative: De Clercq & Partners
(86) International application number: PCT/EP2018/054513
(87) International publication number: WO 2018/154053

(56) References cited:
- WO-A1-2008/000196
- WO-A1-2014/028767
- WO-A1-2015/161195
- WO-A1-2016/137815
- WO-A1-2017/070048
- US-A1- 2015 143 860

## Description

### TECHNICAL FIELD

The present application generally relates to a method for the manufacture of a liquid composition essentially consisting of an organic solvent of the type glycol ether and a urease inhibitor of the type phosphoric triamide and products obtained therewith.

### BACKGROUND

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is a basic element for any living system as a constituent of protein. Unfortunately, urea nitrogen cannot be assimilated directly by the plants and needs to be converted through hydrolysis into ammonium and nitrification into nitrate. Urea is first hydrolysed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (*i.e.* by incorporation or addition) with a urease inhibitor. Urease inhibitors are compounds that are capable of temporarily reducing the activity of the enzyme and slow down the rate at which urea is hydrolysed, avoiding peaks of ammonia concentration and therefore limiting the losses to the air. There are many compounds that can inhibit urease, but only a few that are non-toxic, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985). An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

Phosphoric triamides may also prevent the enzymatic cleavage of urea in animal wastes, thereby decreasing odour. Similarly, the urease inhibitors may mask animal urine odour, thus dissuading animals from undesired territorial behaviour, including territorial marking with urine.

Industrial grade nBTPT is a solid, waxy compound, which has a melting point of about 58 - 60 °C, and which starts to decompose in contact with moisture and at elevated temperatures, in particular above 60 °C. Direct application onto urea particles is very difficult. Thus, what is needed is a solvent system, in which the nBTPT is sufficiently soluble and stable, which has a high resistance against crystallization of the nBTPT at a low temperature, a low viscosity at high concentrations of nBTPT, a low toxicity, a low volatility, a low odour/smell, a low flammability, lacks the addition of toxic auxiliary compounds and which can be produced at a low cost.

A large amount of R&D, reflected in a large number of patent publications, has since been devoted to identifying suitable solvents, solvent systems, or solvent systems compositions comprising additives, to confer the required properties to the liquid composition comprising phosphoric triamides, in particular nBTPT, in particular a high solubility and stability of phosphoric triamides, in particular nBTPT, in the solvent system, a high resistance of the solution of phosphoric triamides, in particular nBTPT, against crystallization at a low temperature, a low viscosity at high concentrations of the phosphoric triamides, in particular nBTPT, a low volatility, a low odour/smell, a low flammability, and which can be produced at a low cost,.

WO 2008/000196 (Agra Group, A.S., 2008) discloses several solvent systems for N-alkyl thiophosphoric triamides containing one or more glycol ethers. No details are disclosed as to the particulars of the method for dissolving nBTPT into the solvent system. Polyvinyl pyrrolidone (PVP) and N-methyl pyrrolidone (NMP) were used as crystallization inhibitors, despite the fact that the authors also state that such inhibitors are health-deleterious (NMP is often classified among carcinogenic and teratogenic compounds).

WO2014/028767 (Koch Agronomic Services, LLC., 2014) discloses a solvent system for N-alkyl thiophosphoric triamides, consisting of a blend of triethylene glycol monobutyl ether, tetraethylene glycol monobutyl ether and diethylene glycol monobutyl ether, that was prepared by dissolving molten nBTPT (about 25 weight%) into said solvent system at room temperature or at 40 °C, shaking the resulting liquid for 30 seconds and allowing it to cool to room temperature. The resulting long-term stability was only tested at 0 °C.

Several commercial solutions of nBTPT are available on the market. They are listed in Table 1. None of them contains a glycol ether based solvent system.

**Table 1**

| **Commercial product** | **Composition of solvent (amounts relative to the total solution)** |
|---|---|
| Agrotain^{®} Ultra | 40-70 % propylene glycol, 10-30 % N-methylpyrrolidone, 1-5 % dye system |
| Rhodia Ag-Rho^{™} N Protect B | 71-75 % 2,2-dimethyl-1,3-dioxolan-4-yl methanol |
| BASF Limus | < 40 % benzyl alcohol, < 25 % polyethylene imine, < 2 % Orasole Orange 251, < 2 % 3,7-dimethyloct-6-ene nitrile |
| N Yield^{™} | 40-70 % propylene glycol, 20-40 % DMSO |
| Iper N-Protect Liquid | 53-55 % 2,2-dimethyl-1,3-dioxolan-4- yl methanol |

The inventors have now found that a liquid composition, essentially consisting of an organic solvent of the type glycol ether and a urease inhibitor of the type phosphoric triamide, and optionally a dye system, can be prepared with the method according to the invention, that results in a stable composition wherein the phosphoric triamide, in particular nBTPT, has a high solubility and stability, which has a high resistance against crystallization of the phosphoric triamide, in particular nBTPT, at a low temperature, a low viscosity at high concentrations of the phosphoric triamide, in particular nBTPT, a low volatility, a low odour/smell, a low flammability, lacks the addition of toxic auxiliary compounds such as crystallization inhibitors, and which can be produced at a low cost.

In particular, the liquid composition manufactured by the method according to the invention, and essentially consisting of an organic solvent of the type glycol ether and a urease inhibitor of the type phosphoric triamide is free of dimethyl sulfoxide (DMSO), polyvinyl pyrrolidone (PVP) and/or N-methyl pyrrolidone (NMP).

The foregoing examples of the related art and limitations related therewith are intended to be illustrative and not exclusive. Other limitations of the related art will become apparent to those of skill in the art upon a reading of the specification and a study of the drawings and figures.

### SUMMARY OF THE INVENTION

The following embodiments and aspects thereof are described and illustrated in conjunction with systems, tools and methods which are meant to be exemplary and illustrative, and not limiting in scope. In various embodiments, one or more of the above-described problems has been reduced or eliminated, while other embodiments are directed to other improvements.

Briefly, therefore, one aspect of the present invention encompasses a method for the manufacture of a liquid composition essentially consisting of an organic solvent of the type glycol ether and a urease inhibitor of the type phosphoric triamide, and optionally a dye system, wherein the method comprises at least the step of maintaining the liquid composition essentially consisting of an organic solvent of the type glycol ether and a urease inhibitor of the type phosphoric triamide, and optionally a dye system, at a holding temperature which is at least above room temperature but below the melt temperature of said urease inhibitor of the type phosphoric triamide, for a holding time period of at least 1 minute.

Another aspect of the invention provides a liquid composition essentially consisting of diethyl glycol monobutyl ether (DEGMBE) as a solvent and about 10 to 30 weight%, in particular 15 to 25 weight%, more in particular about 25 weight%, relative to the total weight of the liquid solution, of N-(n-butyl) thiophosphoric triamide (nBTPT).

A further aspect of the present invention provides a solid particulate urea-based composition, comprising a solid particulate urea-based compound and the liquid composition according to the invention, wherein said liquid composition forms at least partially a coating on at least part of the particles comprising the urea-based compound, or is incorporated within at least part of the particles comprising the urea-based compound.

A further aspect of the present invention provides a liquid urea-based composition, comprising a dissolved urea-based compound and the liquid composition according to the invention, wherein said liquid composition according to the invention is intimately mixed with the urea-based compound dissolved in a solvent system.

A further aspect of the present invention provides the use of the solid particulate or liquid urea-based composition according to the invention as a urea-containing fertilizer.

Other features and iterations of the invention are described in more detail below.

### DETAILED DESCRIPTION OF THE INVENTION

Disclosed herein are methods for the manufacture of a liquid composition essentially consisting of an organic solvent of the type glycol ether and a urease inhibitor of the type phosphoric triamide, and optionally a dye system.

The present invention also provides a liquid composition essentially consisting of an organic solvent of the type glycol ether, in particular diethylene glycol monobutyl ether (DEGMBE), and N-(n-butyl) thiophosphoric triamide (nBTPT). In particular, the liquid compositions comprise a urease-inhibiting effective amount of at least one N-(n-butyl) thiophosphoric triamide (nBTPT), so that the rate of urea volatilization in a urea-containing fertilizer is delayed or at least substantially retarded.

Additional embodiments and features are set forth in part in the description that follows, and in part will become apparent to those skilled in the art upon examination of the specification, or may be learned by the practice of the embodiments discussed herein. A further understanding of the nature and advantages of certain embodiments may be realized by reference to the remaining portions of the specification the drawings, the chemical structures, and descriptions, which forms a part of this invention. Any description of any R-group or chemical substituent, alone or in any combination, may be used in any chemical formula described herein, and chemical formulae include all conformational and stereoisomers, including diastereomers, epimers, and enantiomers. Moreover, any feature of a composition disclosed herein may be used in combination with any other feature of a composition disclosed herein.

In its broadest sense, the present invention encompasses a method for the manufacture of a liquid composition essentially consisting of an organic solvent of the type glycol ether and a urease inhibitor of the type phosphoric triamide, and optionally a dye system, wherein the method comprises at least the step of maintaining the liquid composition essentially consisting of an organic solvent of the type glycol ether and a urease inhibitor of the type phosphoric triamide, and optionally a dye system, at a holding temperature which is at least above room temperature but below the melt temperature of said urease inhibitor of the type phosphoric triamide, for a holding time period of at least 1 minute.

Surprisingly, the inventors have found that a liquid composition essentially consisting of an organic solvent of the type glycol ether and a urease inhibitor of the type phosphoric triamide, prepared as claimed, without the addition of substantial amounts of further (GHS-classified) solvents or (GHS-classified) additives, offers a high solubility and stability of the urease inhibitor of the type phosphoric triamide, in particular nBTPT, in the solvent, resistance of the liquid solution against crystallization of the urease inhibitor of the type phosphoric triamide, in particular nBTPT, at a low temperature, low viscosity at the claimed concentrations, low toxicity, low volatility, low odour/smell and low flammability, and can be produced at a low cost.

Without wishing to be bound by theory, it is hypothesized that the method according to the invention effectively dissolves the urease inhibitor and avoids or removes the flocs (undissolved solid compound, mostly not visible to the eye) that may act as crystallization nuclei to initiate the crystallization upon cooling to below the crystallization temperature thereof, and that can settle over time, during storage, leading to heterogeneous solutions and handling issues.

According to one aspect, the holding time period during which the liquid composition essentially consisting of an organic solvent of the type glycol ether and a urease inhibitor of the type phosphoric triamide is maintained at a holding temperature ranges between 1 minute and 2 hours, in particular between 1 minute and 30 minutes, or for any holding time period that is practical for a commercial production of the liquid composition according to the invention. Alternatively, the dissolution of the flocs may be monitored, preferably on-line, e.g. by light scattering, and the holding time period may be set and adjusted depending on the results of such monitoring process.

According to one aspect, the holding temperature is kept essentially constant during said holding time period. It is obvious that the composition essentially consisting of an organic solvent of the type glycol ether and a urease inhibitor of the type phosphoric triamide may be heated to arrive at a temperature in a range which is defined as at least above room temperature but below the melt temperature of said urease inhibitor of the type phosphoric triamide, and may be varied within said range. However, the best results were obtained when the temperature was maintained at an essentially constant temperature within the defined range.

Advantageously, at least during the claimed process step, stirring or an ultrasonic treatment may be applied during said holding time period as it could increase the homogeneity of the composition according to the invention and shorten the production time.

The method according to the invention, as well as the liquid composition produced therewith does not comprise any other substances other than an organic solvent of the type glycol ether and a urease inhibitor of the type phosphoric triamide, and optionally a dye system, in particular does not comprise DMSO, PVP and/or NMP. The term "essentially consisting of" should be interpreted as consisting for 98 weight % or more, such as 98 weight%, 99 weight%, 99,5 weight% or 99,75 weight% of said three listed components, the rest being impurities or compounds that are not intended to perform any function in the method or liquid composition according to the invention, such as surfactants, dissolution agents, nutrient components and the like, and which could add to the toxic element loading of the composition.

### Urease inhibitor

Another aspect of the invention provides a method for the manufacture of a liquid composition essentially consisting of an organic solvent of the type glycol ether and a urease inhibitor of the type phosphoric triamide, wherein the urease inhibitor of the type phosphoric triamide is a compound of formula (I): 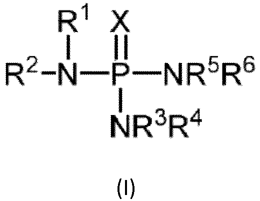 wherein :
X is oxygen or sulphur;
R¹ is selected from the group consisting of alkyl, cycloalkenyl, aralkyl, aryl, alkenyl, alkynyl, and cycloalkyl; and
R² is selected from the group consisting of hydrogen, alkyl, cycloalkenyl, aralkyl, aryl, alkenyl, alkynyl, and cycloalkyl, or
R¹ and R² together may form an alkylene or alkenylene chain which may optionally include one or more heteroatoms of divalent oxygen, nitrogen or sulphur, completing a 4-, 5-, 6-, 7-, or 8-membered ring structure ; and
R³, R⁴, R⁵ and R⁶ are individually selected from the group consisting of hydrogen and alkyl having 1 to 6 carbon atoms, and
R¹, R², R³, R⁴, R⁵ and R⁶, when not hydrogen, may each be optionally substituted with one or more selected from the group consisting of trihalomethyl, naphtoxy, alkyl, halogen, arylmercapto, phenoxy, phenyl, nitro, cyano, amino, alkylamino, dialkylamino, alkoxy, mercapto, alkylmercapto, alkylcarbonyl, arylamino, arylcarbonyl, alkoxycarbonyl, carboxy, diarylamino, and carbonamide.

In some embodiments X may be sulphur.

In other embodiments, R¹ may be alkyl, cycloalkyl, aryl, or substituted aryl. The substitution may be selected from the group consisting of C₁-C₄-alkyl, butyl, cyclohexyl, phenyl, and nitrophenyl.

In some embodiments, R¹ may be alkyl.

In yet other embodiments R², R³, R⁴, R⁵ and R⁶ may each be hydrogen.

In particular embodiments, X may be sulphur, R¹ may be alkyl, and R², R³, R⁴, R⁵ and R⁶ may each be hydrogen.

In further embodiments, the phosphoric triamide comprising Formula (I) may be selected from the group consisting of N-(n-butyl) thiophosphoric triamide (nBTPT), N- cyclohexyl thiophosphoric triamide, and N-(2-nitrophenyl) phosphoric triamide.

In particular embodiments, the phosphoric triamide may be N-(n-butyl) thiophosphoric triamide (nBTPT).

The amount of urease inhibitor of the type phosphoric triamide, in particular nBTPT, in the method may vary, depending on the application. In general, the weight percentage of the urease inhibitor of the type phosphoric triamide, in particular nBTPT, to the total composition may range from 1 to 30 weight%, relative to the total weight of said liquid composition. Above the disclosed range, the method according to the invention does not provide a stable composition according to the invention.

The weight percentage of nBTPT to the total composition ranges from 10 weight% to 30 weight%, relative to the total weight of said liquid composition. In various embodiments, the weight percent of urease inhibitor of the type phosphoric triamide, in particular nBTPT to the total composition is 10 weight%, about 11 weight%, about 12 weight%, about 13 weight%, about 14 weight%, about 15 weight%, about 16 weight%, about 17 weight%, about 18 weight%, about 19 weight%, about 20 % weight%, about 21 weight%, about 22 weight%, about 23 weight%, about 24 weight%, about 25 weight%, about 26 weight%, about 27 weight%, about 28 weight%, about 29 weight%, 30 weight% relative to the total weight of the liquid composition.

In one embodiment of the method according to the invention, the weight percent of urease inhibitor of the type phosphoric triamide, in particular nBTPT in the total composition may be greater than 10 weight%. A concentration lower than 10 weight% does not provide the required benefits. For example, a dilution of the composition according to the invention to less than 10 weight% increases the cost per unit of active ingredient and also increase the transportation cost, without an advantage such as a lower crystallization temperature.

In one embodiment of the method according to the invention, the weight percent of urease inhibitor of the type phosphoric triamide, in particular nBTPT in the total composition may be less than 30 weight%. A concentration higher than 30 weight% does not add extra benefits. For example, a more concentrated composition makes it cheaper per unit of volume, but the composition crystallizes more easier, making it less useful in areas where it is stored at low temperature..

In exemplary embodiments of the method according to the invention, the weight percent of urease inhibitor of the type phosphoric triamide, in particular nBTPT in the total composition may range from about 15 weight% to 30 weight%.

In other exemplary embodiments of the method according to the invention, the weight percent of urease inhibitor of the type phosphoric triamide, in particular nBTPT, in the total composition may range from about 16 weight% to about 25 weight%.

Prior art commercial solutions are available, for example as Agrotain^{®} Ultra (Koch, US), N Yield^{™} (Eco Agro, USA), Rhodia Ag-Rho^{™} N Protect B (Solvay, Germany), Iper N-Protect Liquid (Van Iperen, The Netherlands) and BASF Limus (BASF, Germany), which all comprise an amount of nBTPT, typically 20 weight% or more, such as 25 weight%, optionally with further solvents or additives.

In one particular exemplary embodiment of the method according to the invention, the weight percent of urease inhibitor of the type phosphoric triamide, in particular nBTPT, in the total composition may be 25 weight%.

With the method according to the invention, a liquid composition essentially consisting of an organic solvent of the type glycol ether and a urease inhibitor of the type phosphoric triamide, is manufactured that, applied to a solid, particulate, urea-based blend composition comprising a urea ammonium sulphate-based composition in particulate form comprising urea ammonium sulphate, in combination with a stabilizer, selected from the group of alkaline or alkaline-forming inorganic or organic compounds that is able to interact with ammonium sulphate, is able to provide as much nBTPT in the field as said prior art commercial solutions, which comprise a higher amount of nBTPT.

With the method according to the invention, a liquid composition essentially consisting of an organic solvent of the type glycol ether and a urease inhibitor of the type phosphoric triamide, is manufactured that, applied to a solid, particulate, urea-based blend composition comprising a urea-based compound in particulate form, one or more components selected from the group of nitrates, phosphates, sulphates and chlorides in particulate form, in combination with one or more alkaline or alkaline-forming inorganic or organic compounds that is able to interact with the one or more components selected from the group of nitrates, phosphates, sulphates and chlorides in particulate form, is able to provide as much nBTPT in the field as said prior art commercial solutions which comprise a higher amount of nBTPT.

The liquid composition essentially consisting of an organic solvent of the type glycol ether and a urease inhibitor of the type phosphoric triamide can be produced with the method according to the invention at a lower cost than the prior art compositions and introduces less non-fertilizer products into the environment, when used in combination with a urea-based fertilizer. Moreover, extra chemicals are not needed, while some may be either toxic for the environment or for the farmer when handling the product, such as NMP, DMSO and the like, and less volatile compounds are introduced into the environment. The claimed composition according to the invention offers a product that is safe for the user, as well as for the environment.

In exemplary embodiments, the urease inhibitor is used in its solid form as a powder, preferably with a purity of 97 %, or 99 %, or more. It is available, for example, from Shangyu Sunfit Chemical Co. Ltd Shangyu Fine Chemical Industry Zone, China). Within the ambit of this invention, the amount of urease inhibitor of the type phosphoric triamide, in particular nBTPT, refers to the amount of active compound, excluding amounts of impurities.

### Organic solvent

In the method or the liquid composition according to the invention, the at least one organic solvent is of the type glycol ether.

In one embodiment, the organic solvent of the type glycol ether is a compound of formula (II) 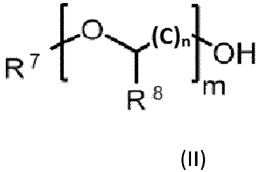 wherein :
R⁷ is C₁₋₆-alkyl;
R⁸ is hydrogen or C₁₋₆-alkyl ;
n is 1 to 2; and
m is 1 to 4.

In some embodiments, R⁷ may be hydrogen.

In other embodiments, R⁸ may be methyl.

In still other embodiments, m may be 1.

In particular embodiments, R⁷ may be hydrogen, R⁸ may be methyl, and m may be 1.

In still other embodiments, R⁷may be butyl, R⁸ may be hydrogen, and m may be 1.

In particular embodiments, the organic solvent of the type glycol ether is selected from the group consisting of diethylene glycol monomethyl ether (DEGMME), diethylene glycol monoethyl ether (DEGMEE), diethylene glycol monopropyl ether (DEGMPE), diethylene glycol monobutyl ether (DEGMBE), dipropylene glycol monomethyl ether (DPGMME), dipropylene glycol monoethyl ether (DPGMEE), dipropylene glycol monopropyl ether (DPGMPE), dipropylene glycol monobutyl ether (DPGMBE), triethylene glycol monomethyl ether (TEGMME), triethylene glycol monoethyl ether (TEGMEE), triethylene glycol monopropyl ether (TEGMPE), triethylene glycol monobutyl ether (TEGMBE), and combinations thereof.

In exemplary embodiments, the organic solvent of the type glycol ether may be diethylene glycol monobutyl ether (DEGMBE) or diethylene glycol monomethyl ether (DEGMME), or a combination thereof.

The total amount of glycol ether in the method according to the invention, may vary. In general, the weight percent of glycol ether to the total composition may range from 55 to 99 weight%. In various embodiments, the weight percent of glycol ether to the total composition may be about 70 weight%, about 71 weight%, about 72 weight%, about 73 weight%, about 74 weight%, about 75 weight%, about 76 weight%, about 77 weight%, about 78 weight%, about 79 weight%, about 80 weight%, about 81 weight%, about 82 weight%, about 83 weight%, about 84 weight%, about 85 weight%, about 86 weight%, about 87 weight%, about 88 weight%, about 89 weight% or about 90 weight%.

In exemplary embodiments, the weight percent of glycol ether in the total composition may range from about 75 weight% to about 85 weight%.

In one embodiment, the weight percent of glycol ether in the total composition is more than about 75 weight%.

In one embodiment, the weight percent of glycol ether in the total composition is less than about 90 weight%.

The liquid composition according to the invention may comprise propylene glycol in addition to those described above.

### Temperatures

According to one embodiment, the method for the manufacture of a liquid composition essentially consisting of an organic solvent of the type glycol ether and a urease inhibitor of the type phosphoric triamide comprises the step of maintaining the liquid composition essentially consisting of an organic solvent of the type glycol ether and a urease inhibitor of the type phosphoric triamide, and optionally a dye system, at a holding temperature which is at least above 20 °C but below the melt temperature of said urease inhibitor of the type phosphoric triamide.

In various embodiments, the holding temperature may range from 21 °C to 60 °C.

In various embodiments, the holding temperature may be about 21 °C, about 22 °C, about 23 °C, about 24 °C, about 25 °C, about 26 °C, about 27 °C, about 28 °C, about 29 °C, about 30 °C, about 31 °C, about 32 °C, about 33 °C, about 34 °C, about 35 °C, about 36 °C, about 37 °C, about 38 °C, about 39 °C, about 40 °C, about 41 °C, about 42 °C, about 43 °C, about 44 °C, about 45 °C, about 46 °C, about 47 °C, about 48 °C, about 49 °C, about 50 °C, about 51 °C, about 52 °C, about 53 °C, about 54 °C, about 55 °C, about 56 °C, about 57 °C, about 58 °C, about 59 °C, or about 60 °C.

In one particular embodiment, the holding temperature is more than 35 °C, preferably from 35 to 60 °C.

In one particular embodiment, the holding temperature is more than 40 °C.

In one particular embodiment, the holding temperature is less than the melt temperature of said urease inhibitor of the type phosphoric triamide. This temperature is necessary to obtained the claimed benefits. Furthermore, it is obvious that the holding temperature should not be higher than the decomposition temperature of the urease inhibitor of the type phosphoric triamide to avoid decomposition of the phosphoric triamide compound when maintained at the holding temperature.

In exemplary embodiments, in particular where nBTPT is used in DEGMBE, the holding temperature may range from about 35 to 60 °C.

### Further Components

In various embodiments, the method and the resulting liquid composition according to the invention may further comprise adding a dye, pigment, pigment dispersion, lake pigment, colour additive, and the like, herein further called a dye system. The dye system may serve several purposes: to show that the urea-containing fertilizer has been adequately covered with the liquid composition according to the invention, in particular with the urease inhibitor of the type phosphoric triamide, in particular nBTPT, to aid the user in monitoring the application of the urea-containing fertilizer to the field, in the handling chain to help differentiating treated urea containing fertilizer from untreated one, and to support the brand of commercially available products.

According to one embodiment, the method according to the invention further comprising a step wherein an amount of a dye system is added to the liquid composition essentially consisting of an organic solvent of the type glycol ether and a urease inhibitor of the type phosphoric triamide.

The step of adding a dye may be carried out before or after the addition of the urease inhibitor of the type phosphoric triamide to the organic solvent of the type glycol ether, or before or after the step of heating or ultrasonic treatment.

In some embodiments, the dye system may be an industrial grade or an Food, Drug & Cosmetic (FD&C) grade dye.

In preferred embodiments, the dye system is compatible with the composition to which it is added, in the sense that the dye system does not interact with the components of the composition, it does not degrade nor aids the degradation of the urease inhibitor of the type phosphoric triamide, nor does it deteriorate any of the properties of the composition to which it is added, in particular the stability of the composition to which it is added.

In exemplary embodiments, the dye system may be a water-based dye, comprising an active dye compound and water. Surprisingly, it was shown that the small amount of such aqueous solution had no detrimental influence on composition to which it was added.

In exemplary embodiments, the dye system may be a dye system that is soluble in the solvent of the type glycol ether. Surprisingly, it was shown that the small amount of such aqueous solution had no detrimental influence on composition to which it was added. Without wishing to be bound by theory, it is hypothesized that the addition of a glycol-soluble dye system does not add crystallization nuclei to the composition according to the invention, such that a low crystallization temperature of the urease inhibitor may be obtained.

The amount of dye system in the liquid composition may vary. In general, the weight percent of dye system to the total composition may range from 0 to 1 weight%.

In various embodiments, the weight percent of dye system to the total composition may be about 0.05 weight%, 0.1 weight%, 0.15 weight%, 0.204 weight%, 0.25 weight%, 0.30 weight%, 0.35 weight%, 0.40 weight%, 0.45 weight%, 0.50 weight%, 0.55 weight%, 0.60 weight%, 0.65 weight%, 0.70 weight%, 0.75 weight%, 0.80 weight%, 0.85 weight%, 0.90 weight%, 0.95 weight% or 1 weight%.

In one embodiment, the weight percent of dye system in the total composition is more than about 0,01 weight%.

In one embodiment, the weight percent of dye system in the total composition is less than about 1 weight%.

### Additional treatment steps

The method for the manufacture of a liquid composition essentially consisting of an organic solvent of the type glycol ether and a urease inhibitor of the type phosphoric triamide, and optionally a dye system, may comprises the step of stirring and/or ultrasonically treating said liquid composition. It is believed that this step reduces the number of crystallization seeds and increases the crystallization stability of the liquid composition according to the invention.

With ultrasonic treatment is meant any treatment that is equivalent to the treatment as described in the experimental part, in particular using a frequency of more than 20 kHz, in particular of 37 kHz and a power of between 0,1 and 10 kW, in particular of between 200 and 1000 W, depending on the scale of the embodiment.

In one embodiment, the ultrasonic treatment is carried out for a time, ranging from 1 minutes to 2 hours. Exemplary, such time may be up to 10 minutes, 20 minutes, 40 minutes, 60 minutes or 120 minutes.

In one embodiment, the liquid composition essentially consisting of an organic solvent of the type glycol ether and a urease inhibitor of the type phosphoric triamide, and optionally a dye system, is stirred while subjected to the ultrasonic treatment.

The method for the manufacture of a liquid composition essentially consisting of an organic solvent of the type glycol ether and a urease inhibitor of the type phosphoric triamide, and optionally a dye system, may comprises both the steps of stirring and ultrasonic treatment.

In exemplary embodiments, the stirring is carried out at 45 °C in a liquid composition essentially consisting of an organic solvent of the type glycol ether and a urease inhibitor of the type phosphoric triamide, and optionally a dye system for about 15 minutes.

### Forming the Composition

The method for the manufacture of a liquid composition essentially consisting of an organic solvent of the type glycol ether and a urease inhibitor of the type phosphoric triamide may further comprise the step of mixing an amount of solid or liquid (i.e. molten) urease inhibitor of the type phosphoric triamide in said amount of organic solvent of the type glycol ether at a certain temperature.

According to one embodiment, an amount of said organic solvent of the type glycol ether is heated to a first temperature at least above 20 °C but below the melt temperature of said urease inhibitor of the type phosphoric triamide. Subsequently, an amount of solid or liquid urease inhibitor of the type phosphoric triamide is added.

According to an alternative embodiment, an amount of said organic solvent of the type glycol ether is mixed at room temperature with an amount of solid of liquid urease inhibitor of the type phosphoric triamide. Subsequently, the composition comprising said organic solvent of the type glycol ether and said urease inhibitor of the type phosphoric triamide is heated to a certain temperature.

Preferably, solid urease inhibitor of the type phosphoric triamide is used, as liquid (i.e. molten) urease inhibitor of the type phosphoric triamide is exposed to a high temperature (i.e. at least the melting temperature) which increases the possibility for decomposition.

Optionally, an amount of a dye system can be added to the liquid composition essentially consisting of an organic solvent of the type glycol ether and a urease inhibitor of the type phosphoric triamide.

### Cooling the Composition

The method for the manufacture of a liquid composition essentially consisting of an organic solvent of the type glycol ether and a urease inhibitor of the type phosphoric triamide may further comprise the step of cooling the composition that has been maintained at a holding temperature, to a lower temperature, preferably room temperature. The composition may then be ready for use or for packaging and storage.

According to an exemplary embodiment, the method according to the invention comprises the steps of :
- providing an amount of glycol ether, in particular DEGMBE, at room temperature ;
- adding 10 to 25 weight%, relative to the total weight of said liquid composition, of N-(n-butyl) thiophosphoric triamide (nBTPT) in said glycol ether;
- heating said liquid composition that comprises said glycol ether and said N-(n-butyl) thiophosphoric triamide (nBTPT);
- maintaining said composition at 45 °C for 15 minutes; and
- cooling said liquid composition to room temperature.

According to an exemplary embodiment, the method according to the invention comprises the steps of :
- providing an amount of glycol ether, in particular DEGMBE, at room temperature ;
- heating said liquid composition that comprises said glycol ether to 45 °C;
- adding 10 to 25 weight%, relative to the total weight of said liquid composition, of N-(n-butyl) thiophosphoric triamide (nBTPT) in said glycol ether;
- maintaining said composition at 45 °C for 15 minutes, optionally while stirring; and
- cooling said liquid composition to room temperature.

### Liquid composition

The present invention also provides a liquid composition essentially consisting of an organic solvent of the type glycol ether and a urease inhibitor of the type phosphoric triamide, and optionally a dye system, obtainable by a method for the manufacture of a liquid composition essentially consisting of an organic solvent of the type glycol ether and a urease inhibitor of the type phosphoric triamide, comprising at least the step of maintaining the liquid composition essentially consisting of an organic solvent of the type glycol ether and a urease inhibitor of the type phosphoric triamide, and optionally a dye system, at a holding temperature which is at least above room temperature but below the melt temperature of said urease inhibitor of the type phosphoric triamide, for a holding time period of at least 1 minute.

The present invention also provides a liquid composition essentially consisting of diethylene glycol monobutyl ether (DEGMBE) and a urease inhibitor of the type phosphoric triamide, and optionally a dye system, having a crystallization temperature of the urease inhibitor of the type phosphoric triamide in said organic solvent of the type glycol ether of less than -12°C, more preferably less than -14°C, even more preferably less than -16°C, and most preferably less than -18°C.

The present invention also provides a liquid composition essentially consisting of diethylene glycol monobutyl ether (DEGMBE), as a solvent and 10 to 30 weight%, in particular 15 to 25 weight%, more in particular about 25 weight%, relative to the total weight of the liquid solution, of N-(n-butyl) thiophosphoric triamide (nBTPT).

### Solid fertilizer products

The present invention also provides a method for treating a solid particulate urea-based composition, in particular a urea-containing fertilizer, comprising at least a urea-based compound in particulate form. The method comprises contacting the solid particulate urea-based composition with a liquid composition essentially consisting of an organic solvent of the type glycol ether and a urease inhibitor of the type phosphoric triamide, in particular nBTPT, as obtained using the method according to the invention, or being a liquid composition essentially consisting of diethylene glycol monobutyl ether (DEGMBE) as a solvent and N-(n-butyl) thiophosphoric triamide (nBTPT).

According to one embodiment, the liquid composition forms at least partially a coating on at least part of the urea-based compound in particulate form.

The liquid composition according to the invention may be added to any solid particulate urea-based composition, such as a urea-containing fertilizer. The liquid composition according to the invention may be added to the solid particulate urea-based composition during or after manufacture, using a fertilizer blender or other equipment that may be used to roll or blend the urea-containing composition with the liquid composition. A rotary device may tumble the urea-containing fertilizer and allow for uniform contact with the liquid composition without spillage. Auger, mixing screw and paddle mixers may also be used. Exposed inner surfaces of the mixing equipment may be clean, dry, and rust-free.

According to one embodiment, the liquid composition is incorporated in at least part of the urea-based compound in particulate form, for example, such as disclosed in US 5353365 (Freeport-McMoRan Resource Partners, 1994).

According to one embodiment, the solid particulate urea-based compound is selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN) , urea ammonium sulphate (UAS), urea ammonium phosphate (UAP), urea potassium salts (UK), urea-based compound NPK fertilizer, and mixtures thereof.

According to another embodiment, the solid particulate urea-based composition is a physical blend of a urea-based compound in particulate form, in particular such as the ones listed above, and one or more components selected from the group of nitrates, phosphates, sulphates and chlorides in particulate form, selected from the group of : ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogenorthophosphate), super phosphate, triple superphosphate, rock phosphate, potassium sulphate, potassium magnesium sulphate, ammonium sulphate (AS), urea ammonium sulphate, urea calcium ammonium nitrate, urea ammonium sulphate, potassium chloride (MOP), potassium sulphate (SOP), urea potassium salts (UK), urea-based compound NPK fertilizer, or mixtures thereof.

The present invention also provides a solid particulate urea-based composition, comprising a solid particulate urea-based compound and the liquid composition according to the invention, wherein the liquid composition forms at least partially a coating on at least part of the particles comprising the urea-based compound.

### Liquid fertilizer products

The present invention also provides a method for treating a liquid urea-based composition, in particular a urea-containing fertilizer, comprising at least a urea-based compound.

The method comprises intimately contacting the liquid urea-based composition with a liquid composition essentially consisting of an organic solvent of the type glycol ether and a urease inhibitor of the type phosphoric triamide, in particular nBTPT, as obtained using the method according to the invention, or being a liquid composition essentially consisting of diethylene glycol monobutyl ether (DEGMBE), as a solvent and N-(n-butyl) thiophosphoric triamide (nBTPT).

According to one embodiment, the liquid composition is intimately mixed with the urea-based compound dissolved in a solvent, preferably in water, and using common mixing apparatus.

According to one embodiment, the liquid urea-based composition is an aqueous composition.

According to one embodiment, the liquid urea-based composition is obtained either as liquid composition of urea-based compounds, such as urea ammonium nitrate (UAN) or urea calcium nitrate (UCaN), which are usually insufficiently stable in solid form, or by dissolving a solid particulate urea-based compound in a suitable solvent, preferably water.

According to one embodiment, the solid particulate urea-based compound that is to be dissolved to obtain the liquid urea-based composition, is selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN) , urea ammonium sulphate (UAS), urea ammonium phosphate (UAP), urea potassium salts (UK), and mixtures thereof.

According to another embodiment, further compounds may be dissolved in the liquid urea-based composition. Said one or more components are selected from the group of nitrates, phosphates, sulphates and chlorides in particulate form, selected from the group of : ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydro-genorthophosphate), super phosphate, triple superphosphate, rock phosphate, potassium sulphate, potassium magnesium sulphate, ammonium sulphate (AS), urea ammonium sulphate, urea calcium ammonium nitrate, urea ammonium sulphate, potassium chloride (MOP), potassium sulphate (SOP), urea potassium salts (UK), urea-based compound NPK fertilizer, or mixtures thereof.

Preferably, the dissolved urea-based compound is selected from the group of urea, urea ammonium nitrate (UAN), urea calcium nitrate (UCaN) or mixtures thereof.

### Application

The liquid composition essentially consisting of an organic solvent of the type glycol ether and a urease inhibitor of the type phosphoric triamide can be used in a urea-containing fertilizer, being either in the form of a liquid or a solid. The urea-containing composition for use as a fertilizer may be spread across the top of the soil using a spreader truck or an airflow truck. The urea-containing fertilizer containing the liquid composition may be used for any nitrogen-consuming plants including, for example, row crops, specialty crops, pastures, sod farms, turf grass, ornamentals, and other landscape or nursery plantings. The liquid composition may be used with urea-containing fertilizers applied to the surface during pre-plant, pre-emergence, side-dress, top-dress, broadcast, or other post-planting applications. Without wishing to be bound by theory, the liquid composition beneficially retards the hydrolysis of urea, controls volatility of the fertilizer once applied, and prevents ammonia loss while the urea is on the soil surface.

A skilled person would recognize that the rate of application for urea-containing fertilizers and the liquid compositions is affected by many environmental factors, many of which contribute to fertilizer volatilization. Without wishing to be bound by theory, the factors increasing volatilization that should be considered when choosing the appropriate rate include high soil moisture; drying conditions including low humidity, sun and wind; high air and soil temperatures; high soil pH; low organic matter content in the soil; low cation-exchange capacity (CEC) soil; high amounts of crop residue; and the length of control needed.

In other embodiments, the liquid composition according to the invention may be added to fertilizers and wastes of animal origin, such as excrement or manure, to decrease nitrogen loss and odour formation.

In still other embodiments, the liquid composition may also be added into sprays that mask animal urine odours.

### DEFINITIONS

The compounds described herein may have asymmetric centres.

The term "liquid" refers to a solution, suspension, or an emulsion that is fluid under ambient conditions. Generally, the liquid compositions are liquid (as opposed to solid) from at least about -20 °C to at least about 60 °C, such as from about 0 °C to about 40 °C, or from about 10 °C to about 30 °C.

Compounds of the present invention containing an asymmetrically substituted atom may be isolated in optically active or racemic form. All chiral, diastereomeric, racemic forms and all geometric isomeric forms of a structure are intended, unless the specific stereochemistry or isomeric form is specifically indicated.

The term "acyl," as used herein alone or as part of another group, denotes the moiety formed by removal of the hydroxy group from the group COOH of an organic carboxylic acid, e.g., RC(O)-, wherein R is R^{a}, R^{a}O-, R^{a} R^{b}N-, or R^{a}S-, wherein R^{a} is hydrocarbyl, heterosubstituted hydrocarbyl, or heterocyclo, and R^{b} is hydrogen, hydrocarbyl, or substituted hydrocarbyl.

The term "alkyl" as used herein describes groups which are preferably lower alkyl, containing from one to eight carbon atoms in the principal chain and up to 20 carbon atoms. They may be straight or branched chain or cyclic and include methyl, ethyl, propyl, isopropyl, butyl, hexyl and the like.

The term "alkenyl" as used herein describes groups which are preferably lower alkenyl, containing from two to eight carbon atoms in the principal chain and up to 20 carbon atoms. They may be straight or branched chain or cyclic and include ethenyl, propenyl, isopropenyl, butenyl, isobutenyl, hexenyl, and the like.

The term "alkynyl" as used herein describes groups which are preferably lower alkynyl containing from two to eight carbon atoms in the principal chain and up to 20 carbon atoms. They may be straight or branched chain and include ethynyl, propynyl, butynyl, isobutynyl, hexynyl, and the like.

The term "aromatic" as used herein alone or as part of another group denotes optionally substituted homo- or heterocyclic conjugated planar ring or ring system comprising delocalized electrons. These aromatic groups are preferably monocyclic (e.g., furan or benzene), bicyclic, or tricyclic groups containing from 5 to 14 atoms in the ring portion. The term "aromatic" encompasses "aryl" groups defined below.

The terms "aryl" or "Ar" as used herein alone or as part of another group denote optionally substituted homocyclic aromatic groups, preferably monocyclic or bicyclic groups containing from 6 to 10 carbons in the ring portion, such as phenyl, biphenyl, naphthyl, substituted phenyl, substituted biphenyl, or substituted naphthyl.

The terms "halogen" or "halo" as used herein alone or as part of another group refer to chlorine, bromine, fluorine, and iodine.

The term "heteroatom" refers to atoms other than carbon and hydrogen.

The terms "heterocycle" or "heterocyclic" as used herein alone or as part of another group denote optionally substituted, fully saturated or unsaturated, monocyclic or bicyclic, aromatic or non-aromatic groups having at least one heteroatom in at least one ring, and preferably 5 or 6 atoms in each ring. The heterocyclic group preferably has 1 or 2 oxygen atoms and/or 1 to 4 nitrogen atoms in the ring, and is bonded to the remainder of the molecule through a carbon or heteroatom.

When introducing elements of the present invention or the embodiments(s) thereof, the articles "a," "an," "the," and "said" are intended to mean that there are one or more of the elements. The terms "comprising," "including," and "having" are intended to be inclusive and mean that there may be additional elements other than the listed elements.

Having described the invention in detail, it will be apparent that modifications and variations are possible without departing from the scope of the invention defined in the appended claims.

### EXAMPLES

The following examples are included to demonstrate certain embodiments of the invention. It should be appreciated by the skilled person that the techniques disclosed in the examples represent techniques discovered by the inventors to function well in the practice of the invention.

### Description of Figures

- Figure 1 :: Stability of nBTPT in different liquid nBTPT solutions with storage in closed plastic containers at room temperature (20 °C) after 15 days of storage at room temperature. **[A** = 25% nBTPT in DEGMBE/PG 1:1, **B** = 25% nBTPT in DEGMME, **C** = 25% nBTPT in DEGMBE].
- Figure 2:: Stability of nBTPT in different liquid nBTPT solutions **on** urea granules with storage at 70°C in closed plastic containers after 11 days. **[A** = 17.5% nBTPT in PG on urea, **B** = 25% nBTPT in DEGMBE on urea, **C** = 25% nBTPT in DEGMBE/PG 1:1 on urea].

### Determination of stability of nBTPT

### HPLC analysis of nBTPT-content

HPLC analysis of nBTPT is done as described in the procedure CEN 15688-2007.

### Products

Solid N-(n-butyl)thiophosphoric triamide was obtained from Sunfit Chemical Co. (China) (CAS-Nr. 94317-64-3), as a white crystalline solid with a melting point of 58-60 °C.

Propylene glycol was obtained from Amresco (a VWR company) (CAS-Nr. 57-55-6), as colourless, odourless viscous liquid with a boiling point of 188.2 °C.

Diethylene glycol monomethyl ether (DEGMME) was obtained from VWR chemicals and reagents Merck and from INEOS N.V. (Zwijndrecht, Belgium) (CAS-Nr. 111-77-3), as colourless, odourless viscous liquid with a boiling point of 190-196 °C.

Diethylene glycol monobutyl ether (DEGMBE) was obtained from VWR chemicals and reagents Merck and from INEOS N.V. (Zwijndrecht, Belgium) (CAS-Nr. 111-34-5), as colourless, odourless viscous liquid with a boiling point of 226-234 °C.

The flash point of propylene glycol is 130 °C. For comparison, the flash point of Agrotain^{®} is 81.1 °C, which is considerably lower.

The toxicity oral rat LD50 is 20000 mg/kg for propylene glycol, 6450 mg/kg for DEGMME and 5660 mg/kg for DEGMBE. For comparison, the toxicity of NMP (major solvent in Agrotain) oral rat LD50 is 3914 mg/kg, which is considerably lower.

### Experiment 1 - Crystallization stability under stirred conditions of nBTPT in glycol ether type solvents at lower temperatures.

To determine the crystallization temperature of nBTPT in a glycol ether type solvent mixture at different concentrations under stirred conditions, an acetone bath was cooled between -10 and -25 °C with the addition of liquid nitrogen and the crystallization temperature was measured with a thermometer logging while stirring, for several samples. The solutions of nBTPT in the glycol ether type solvent mixture were prepared by heating up the mixture of nBTPT and the specific solvent to 45°C, followed by stirring for 15 minutes at 45°C until a clear solution was achieved. The results are shown in Table 2.

**Table 2**

| | Crystallization temperature (°C) under stirred condition |
|---|---|
| | Maintaining nBTPT solutions at 45 °C for 15 min |
| 25% nBTPT in PG | + 9.3 °C |
| 25% nBTPT in DEGMBE/PG 1:1 | -9.1°C |
| 25% nBTPT in DEGMME | -10 °C |
| 25% nBTPT in DEGMBE | **-18.9 °C** |
| 26% nBTPT in DEGMBE | -12.8 °C |
| 27.5% nBTPT in DEGMBE | -5.6 °C |
| 30% nBTPT in DEGMBE | + 4.5 °C |
| 32.5% nBTPT in DEGMBE | + 11.5 °C |
| 35% nBTPT in DEGMBE | + 20.0 °C |
| 40% nBTPT in DEGMBE | Crystallized at room temperature |

A solution of 25% nBTPT in DEGMBE was also made at room temperature, followed by stirring for 4 hours until a clear solution was achieved. The crystallization temperature under stirred conditions was determined and compared to the same solution prepared at 45°C. The results are shown in Table 2.

**Table 3**

| | Crystallization temperature (°C) under stirred condition | |
|---|---|---|
| | room temperature for 4 hours | 45 °C for 15 min |
| 25% nBTPT in DEGMBE | -4.7 | -18.9 |

There is clearly a beneficial effect of the heating method on the crystallization temperature. As an extra step in the preparation procedure of the solutions of nBTPT in DEGMBE, said heating at or above 40 °C is recommended for the best results.

### Experiment 2 - Crystallization stability under stagnant conditions of nBTPT in glycol type solvents at lower temperatures.

To determine the crystallization stability of nBTPT in a glycol type solvent mixture under stagnant conditions, the specific nBTPT solutions were placed in a freezer at different temperatures and followed up in time.

The solutions of nBTPT in the glycol type solvent mixture were prepared by heating up the mixture of nBTPT and the specific solvent to 45°C, followed by stirring for 15 minutes at 45°C until a clear solution was achieved. The results are shown in Table 4.

**Table 4**

| | Crystallization stability under stagnant condition | | |
|---|---|---|---|
| | -16.5°C for 24 h | -16.5°C for 72 h | -26.0°C for 120 h |
| 25 % nBTPT in propylene glycol | crystallized | crystallized | crystallized |
| 25 % nBTPT in DEGMBE/PG 1:1 | n.a. | n.a. | crystallized |
| 25 % nBTPT in DEGMBE | **Clear liquid** | **Clear liquid** | **Clear liquid** |
| 26 % nBTPT in DEGMBE | Partially crystallized | crystallized | crystallized |

| | | | |
|---|---|---|---|
| n.a. = not analyzed | | | |

### Experiment 3 - Stability of nBTPT in solutions

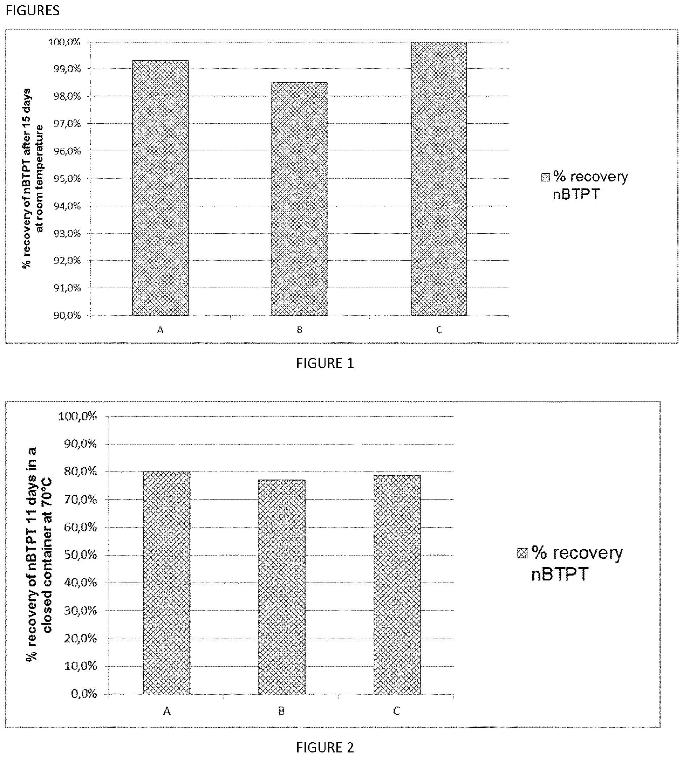

The stability of nBTPT in some of the above listed solutions was followed over time when stored at room temperature. The results are summarized in Figure 1. All formulations seems to be very stable at room temperature, with almost a full recovery after 15 days of storage.

### Experiment 4 - Stability of nBTPT in glycol type solvent mixtures on urea granules.

For lab scale experiments, nBTPT was applied onto urea by adding 1.2 kg of urea-based compound to a lab scale drum. In a next step, the nBTPT material was slowly added. A residence time of 10 minutes was applied and the rotating speed of the drum was consequently the same in each experiment.

An accelerated stability test was done storing these samples at elevated temperature at 70 °C in a closed plastic container.

For this experiment, urea granules were coated with 550 ppm of the liquid composition according to the invention. Subsequently, the granules were stored for 11 days in closed plastic containers at 70°C and the decomposition of nBTPT was followed. The results are shown in Figure 2.

Overall, all tested nBTPT liquid formulations on urea granules seemed to have similar stability under this severe storage condition. 25% nBTPT in DEGMBE (with or without the co-solvent PG) on urea showed a comparable stability as nBTPT in propylene glycol on urea and showed a +/- 20 % nBTPT degradation in 11 days at 70°C. Propylene glycol is used as a standard main solvent applied in commercial nBTPT formulations like N Yield^{™} and Agrotain^{®} Ultra.

### Experiment 5 - Odour

The odour was determined for all nBTPT sources *as such,* applied onto urea granules in a concentration of 500 ppm. A qualitative overview is given in Table 5.

**Table 5**

| **Urease inhibitor** | **Smell of the nBTPT formulation** | **Smell from granules** | **Remark** |
|---|---|---|---|
| BASF Limus | strong | none | very intensive odour |
| N Yield^{™} | strong | strong | DMSO smell |
| Agrotain^{®} Ultra | strong | strong | very intensive odour |
| Rhodia Ag-Rho^{™} N Protect B | medium | weak | |
| nBTPT powder | strong | none | |
| 25 % nBTPT in DEGMBE | weak | weak | pleasant smell |

All nBTPT sources have a significant smell/odour. However, compared to the commercial sources, the liquid composition according to the invention has a weak odour as such and no significant odour when applied onto urea granules.

### Experiment 6 : Production of a commercial batch

The following 1000 kg batch was produced :

| | |
|---|---|
| DEGMBE | 742.44 kg |
| nBTPT (purity : about 98.0%) | 255.10 kg (25 %) |
| Duasyn Brilliant Red F3B-SF Liquid | 2.46 kg |
| Total | 1000.0 kg |

### Protocol

1. Charge a vessel with 742.44 kg DEGMBE.
2. Start stirrer and heat to 45 °C.
3. Charge 255.1 kg of nBTPT gradually whilst maintaining the temperature at 45 °C.
4. Mix for 15 minutes after last powder addition.
5. Check if nBTPT is fully dissolved ; if undissolved powder is present, mix for 10 minutes and re-check.
6. Add 2.46 kg Duasyn Brilliant Red F3B-SF Liquid.
7. Mix for 5 minutes.
8. Cool down to room temperature.

Target specification :

| | |
|---|---|
| Appearance : | clear red solution |
| nBTPT content | 25.0 % w/w |

## Claims

1. A method for the manufacture of a liquid composition essentially consisting of an organic solvent of the type glycol ether and a urease inhibitor of the type phosphoric triamide, and optionally a dye system, wherein the method comprises at least the step of maintaining the liquid composition essentially consisting of an organic solvent of the type glycol ether and a urease inhibitor of the type phosphoric triamide, and optionally a dye system, at a holding temperature which is at least above room temperature but below the melt temperature of said urease inhibitor of the type phosphoric triamide, for a holding time period of at least 1 minute.

2. Method according to claim 1, wherein said holding time period ranges between 1 minute and 2 hours.

3. Method according to any one of claims 1 to 2, wherein said holding temperature is kept essentially constant during said holding time period.

4. Method according to any one of claims 1 to 3, wherein stirring or an ultrasonic treatment is applied during said holding time period.

5. Method according to any one of claims 1 to 4, wherein the liquid composition essentially consisting of an organic solvent of the type glycol ether and a urease inhibitor of the type phosphoric triamide, and optionally a dye system, does not comprise any other substances other than an organic solvent of the type glycol ether and a urease inhibitor of the type phosphoric triamide, and optionally a dye system.

6. The method according to any one of claims 1 to 5, wherein the urease inhibitor of the type phosphoric triamide is a compound of formula (I): 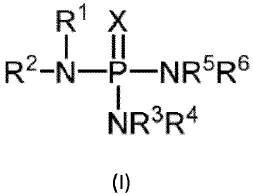 wherein :
X is oxygen or sulphur;
R¹ is selected from the group consisting of alkyl, cycloalkenyl, aralkyl, aryl, alkenyl, alkynyl, and
cycloalkyl; and
R² is selected from the group consisting of hydrogen, alkyl, cycloalkenyl, aralkyl, aryl, alkenyl, alkynyl, and cycloalkyl, or
R¹ and R² together may form an alkylene or alkenylene chain which may optionally include one or
more heteroatoms of divalent oxygen, nitrogen or sulphur, completing a 4-, 5-, 6-, 7-, or 8-membered ring structure ; and
R³, R⁴, R⁵ and R⁶ are individually selected from the group consisting of hydrogen and alkyl having 1 to 6 carbon atoms, and
R¹, R², R³, R⁴, R⁵ and R⁶, when not hydrogen, may each be optionally substituted with one or more selected from the group consisting of trihalomethyl, naphtoxy, alkyl, halogen, arylmercapto, phenoxy, phenyl, nitro, cyano, amino, alkylamino, dialkylamino, alkoxy, mercapto, alkylmercapto, alkylcarbonyl, arylamino, arylcarbonyl, alkoxycarbonyl, carboxy, diarylamino, and carbonamide.

7. The method according to any one of claims 1 to 6, wherein the urease inhibitor is N-(n-butyl) thiophosphoric triamide (nBTPT).

8. The method according to any one of claims 1 to 7, wherein the amount of said urease inhibitor of the type phosphoric triamide ranges from 1 to 30 weight%, relative to the total weight of said liquid composition.

9. The method according to any one of claims 1 to 8, wherein the organic solvent of the type glycol ether is a compound of formula (II) 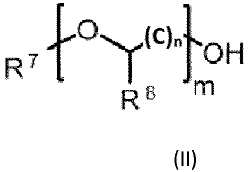 wherein :
R⁷ is C₁₋₆-alkyl;
R⁸ is hydrogen or C₁₋₆-alkyl ;
n is 1 to 2; and
m is 1 to 4.

10. The method according to claim 9, wherein the organic solvent is selected from the group consisting of diethylene glycol monomethyl ether (DEGMME), diethylene glycol monoethyl ether (DEGMEE), diethylene glycol monopropyl ether (DEGMPE), diethylene glycol monobutyl ether (DEGMBE), dipropylene glycol monomethyl ether (DPGMME), dipropylene glycol monoethyl ether (DPGMEE), dipropylene glycol monopropyl ether (DPGMPE), dipropylene glycol monobutyl ether (DPGMBE), triethylene glycol monomethyl ether (TEGMME), triethylene glycol monoethyl ether (TEGMEE), triethylene glycol monopropyl ether (TEGMPE), triethylene glycol monobutyl ether (TEGMBE), and combinations thereof, preferably wherein the organic solvent is diethylene glycol monobutyl ether (DEGMBE).

11. The method according to any one of claims 1 to 10, wherein the amount of said organic solvent of the type glycol ether ranges between 55 and 99 weight%, relative to the total weight of said liquid composition.

12. The method according to any one of the claims 1 to 11 further comprising a step wherein an amount of a dye system is added to the liquid composition essentially consisting of an organic solvent of the type glycol ether and a urease inhibitor of the type phosphoric triamide.

13. The method according to claim 12, wherein the amount of said dye system ranges between 0 and 1.0 weight%.

14. A liquid composition essentially consisting of diethylene glycol monobutyl ether (DEGMBE) as a solvent and 10 to 30 weight%, in particular 15 to 25 weight%, more in particular about 25 weight%, relative to the total weight of the liquid solution, of N-(n-butyl) thiophosphoric triamide (nBTPT), **characterized in that** nBTPT has a crystallization temperature in the liquid composition of less than -12°C.

15. Liquid composition according to claim 14, wherein nBTPT has a crystallization temperature in the liquid composition of less than -14°C, more preferably less than -16°C, even more preferably less than -18°C, even more preferably less than -20°C, even more preferably less than -22°C, even more preferably less than -24°C,and most preferably less than -26°C.

16. A solid particulate urea-based composition, comprising a solid particulate urea-based compound and the liquid composition according to claim 14 or 15, wherein the liquid composition forms at least partially a coating on at least part of the particles comprising the urea-based compound, or is incorporated within at least part of the particles comprising the urea-based compound.

17. The solid particulate urea-based composition according to claim 16, wherein the urea-based compound is selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN) , urea ammonium sulphate (UAS), urea ammonium phosphate (UAP), urea potassium salts (UK), urea-based compound NPK fertilizer, and mixtures thereof.

18. The solid particulate urea-based composition according to claim 16, wherein the composition is a physical blend of the urea-based compound in particulate form and one or more components selected from the group of nitrates, phosphates, sulphates and chlorides in particulate form, selected from the group of : ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen orthophosphate), super phosphate, triple superphosphate, rock phosphate, potassium sulphate, potassium magnesium sulphate, ammonium sulphate (AS), urea ammonium sulphate, urea calcium ammonium nitrate, urea ammonium sulphate, potassium chloride (MOP), potassium sulphate (SOP), urea potassium salts (UK), urea-based compound NPK fertilizer, or mixtures thereof.

19. A liquid urea-based composition, comprising a dissolved urea-based compound and the liquid composition according to claim 14, wherein said liquid composition is intimately mixed with the urea-based compound, preferably selected from the group of urea, urea ammonium nitrate (UAN), urea calcium nitrate (UCaN), or mixtures thereof, dissolved in a solvent, preferably in water.

20. Use of the solid particulate or liquid urea-based composition according to claims 17 to 19 as a urea-containing fertilizer.

## Patentansprüche

1. Verfahren zur Herstellung einer flüssigen Zusammensetzung, die im Wesentlichen aus einem organischen Lösungsmittel vom Glykolethertyp und einem Ureasehemmer vom Phosphorsäuretriamidtyp und gegebenenfalls einem Farbstoffsystem besteht, wobei das Verfahren mindestens den Schritt des Haltens der flüssigen, im Wesentlichen aus einem organischen Lösungsmittel vom Glykolethertyp und einem Ureasehemmer vom Phosphorsäuretriamidtyp und gegebenenfalls einem Farbstoffsystem bestehenden Zusammensetzung bei einer Haltetemperatur, die wenigstens oberhalb von Raumtemperatur, aber unterhalb der Schmelztemperatur des Ureasehemmers vom Phosphorsäuretriamidtyp liegt, für einen Haltezeitraum von wenigstens 1 Minute umfasst.

2. Verfahren nach Anspruch 1, wobei der Haltezeitraum zwischen 1 Minute und 2 Stunden beträgt.

3. Verfahren nach einem der Ansprüche 1 bis 2, wobei die Haltetemperatur während des Haltezeitraums im Wesentlichen konstant gehalten wird.

4. Verfahren nach einem der Ansprüche 1 bis 3, wobei während des Haltezeitraums eine Rühr- oder Ultraschallbehandlung angewendet wird.

5. Verfahren nach einem der Ansprüche 1 bis 4, wobei die im Wesentlichen aus einem organischen Lösungsmittel vom Glykolethertyp und einem Ureasehemmer vom Phosphorsäuretriamidtyp und gegebenenfalls einem Farbstoffsystem bestehende flüssige Zusammensetzung keine weiteren Stoffe außer einem organischen Lösungsmittel vom Glykolethertyp und einem Ureasehemmer vom Phosphorsäuretriamidtyp und gegebenenfalls einem Farbstoffsystem umfasst.

6. Verfahren nach einem der Ansprüche 1 bis 5, wobei es sich bei dem Ureasehemmer vom Phosphorsäuretriamidtyp um eine Verbindung der Formel (I): 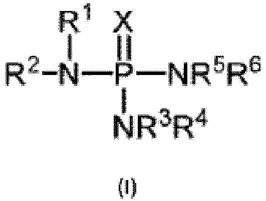 handelt, wobei:
X für Sauerstoff oder Schwefel steht;
R¹ aus der Gruppe bestehend aus Alkyl, Cycloalkenyl, Aralkyl, Aryl, Alkenyl, Alkinyl und Cycloalkyl ausgewählt ist; und
R² aus der Gruppe bestehend aus Wasserstoff, Alkyl, Cycloalkenyl, Aralkyl, Aryl, Alkenyl, Alkinyl und Cycloalkyl ausgewählt ist oder
R¹ und R² gemeinsam eine Alkylen- oder Alkenylenkette, die unter Vervollständigung einer 4-, 5-, 6-, 7-, oder 8-gliedrigen Ringstruktur gegebenenfalls ein oder mehrere Heteroatome von divalentem Sauerstoff, Stickstoff oder Schwefel enthalten kann, bilden können; und
R³, R⁴, R⁵ und R⁶ jeweils unabhängig aus der Gruppe bestehend aus Wasserstoff und Alkyl mit 1 bis 6 Kohlenstoffatomen ausgewählt sind und
R¹, R², R³, R⁴, R⁵ und R⁶, wenn sie nicht für Wasserstoff stehen, gegebenenfalls jeweils mit einem oder mehreren aus der Gruppe bestehend aus Trihalogenmethyl, Naphtoxy, Alkyl, Halogen, Arylmercapto, Phenoxy, Phenyl, Nitro, Cyano, Amino, Alkylamino, Dialkylamino, Alkoxy, Mercapto, Alkylmercapto, Alkylcarbonyl, Arylamino, Arylcarbonyl, Alkoxycarbonyl, Carboxy, Diarylamino und Carbamid ausgewählten Substituenten substituiert sein können.

7. Verfahren nach einem der Ansprüche 1 bis 6, wobei es sich bei dem Ureasehemmer um N-(n-Butyl)thiophosphorsäuretriamid (nBTPT) handelt.

8. Verfahren nach einem der Ansprüche 1 bis 7, wobei die Menge des Ureasehemmers vom Phosphorsäuretriamidtyp 1 bis 30 Gew.-%, bezogen auf das Gesamtgewicht der flüssigen Zusammensetzung, beträgt.

9. Verfahren nach einem der Ansprüche 1 bis 8, wobei es sich bei dem organischen Lösungsmittel vom Glykolethertyp um eine Verbindung der Formel (II) 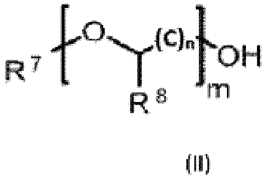 handelt, wobei:
R⁷ für C₁₋₆-Alkyl steht;
R⁸ für Wasserstoff oder C₁₋₆-Alkyl steht;
n 1 bis 2 ist; und
m 1 bis 4 ist.

10. Verfahren nach Anspruch 9, wobei das organische Lösungsmittel aus der Gruppe bestehend aus Diethylenglykolmonomethylether (DEGMME), Diethylenglykolmonoethylether (DEGMEE), Diethylenglykolmonopropylether (DEGMPE), Diethylenglykolmonobutylether (DEGMBE), Dipropylenglykolmonomethylether (DPGMME), Dipropylenglykolmonoethylether (DPGMEE), Dipropylenglykolmonopropylether (DPGMPE), Dipropylenglykolmonobutylether (DPGMBE), Triethylenglykolmonomethylether (TEGMME), Triethylenglykolmonoethylether (TEGMEE), Triethylenglykolmonopropylether (TEGMPE), Triethylenglykolmonobutylether (TEGMBE) und Kombinationen davon ausgewählt ist, wobei es sich bei dem organischen Lösungsmittel vorzugsweise um Diethylenglykolmonobutylether (DEGMBE) handelt.

11. Verfahren nach einem der Ansprüche 1 bis 10, wobei die Menge des organischen Lösungsmittels vom Glykolethertyp 55 bis 99 Gew.-%, bezogen auf das Gesamtgewicht der flüssigen Zusammensetzung, beträgt.

12. Verfahren nach einem der Ansprüche 1 bis 11, ferner umfassend einen Schritt, bei dem man der flüssigen, im Wesentlichen aus einem organischen Lösungsmittel vom Glykolethertyp und einem Ureasehemmer vom Phosphorsäuretriamidtyp bestehenden Zusammensetzung eine Menge an Farbstoffsystem zugibt.

13. Verfahren nach Anspruch 12, wobei die Menge des Farbstoffsystems zwischen 0 und 1,0 Gew.-% beträgt.

14. Flüssige Zusammensetzung, im Wesentlichen bestehend aus Diethylenglykolmonobuthylether (DEGMBE) als ein Lösungsmittel und 10 bis 30 Gew.-%, insbesondere 15 bis 25 Gew.-% und noch spezieller etwa 25 Gew.-%, bezogen auf das Gesamtgewicht der flüssigen Lösung, N-(n-Butyl)thiophosphorsäuretriamid (nBTPT), **dadurch gekennzeichnet, dass** nBTPT in der flüssigen Zusammensetzung eine Kristallisationstemperatur von weniger als -12 °C aufweist.

15. Flüssige Zusammensetzung nach Anspruch 14, wobei nBTPT in der flüssigen Zusammensetzung eine Kristallisationstemperatur von weniger als -14 °C, weiter bevorzugt weniger als -16 °C, noch weiter bevorzugt weniger als -18 °C, noch weiter bevorzugt weniger als -20 °C, noch weiter bevorzugt weniger als - 22 °C, noch weiter bevorzugt weniger als -24 °C und ganz besonders bevorzugt weniger als -26 °C aufweist.

16. Feste, teilchenförmige Zusammensetzung auf Harnstoffbasis, umfassend eine feste, teilchenförmige Verbindung auf Harnstoffbasis und die flüssige Zusammensetzung nach Anspruch 14 oder 15, wobei die flüssige Zusammensetzung zumindest teilweise eine Umhüllung auf zumindest einem Teil der die Verbindung auf Harnstoffbasis umfassenden Teilchen bildet oder zumindest in einem Teil der die Verbindung auf Harnstoffbasis umfassenden Teilchen eingearbeitet ist.

17. Feste, teilchenförmige Zusammensetzung auf Harnstoffbasis nach Anspruch 16, wobei die Verbindung auf Harnstoffbasis aus der Gruppe von Harnstoff, Harnstoff-Calciumsulfat (UCaS), Harnstoff-Calciumnitrat (UCaN), Harnstoff-Magnesiumnitrat (UMgN), Harnstoff-Calciumphosphat (UCaP), Harnstoff-Magnesiumphosphat (UMgP), Harnstoff-Superphosphat (USP), Harnstoff-Calciumammoniumnitrat (UCAN), Harnstoff-Ammoniumsulfat (UAS), Harnstoff-Ammoniumphosphat (UAP), Harnstoff-Kaliumsalzen (UK), NPK-Düngern mit einer Verbindung auf Harnstoffbasis und Mischungen davon ausgewählt ist.

18. Feste, teilchenförmige Zusammensetzung auf Harnstoffbasis nach Anspruch 16, wobei es sich bei der Zusammensetzung um eine physikalische Mischung der Verbindung auf Harnstoffbasis in teilchenförmiger Form und einer oder mehrerer Komponenten handelt, die aus der Gruppe von Nitraten, Phosphaten, Sulfaten, und Chloriden in teilchenförmiger Form ausgewählt sind, die aus der Gruppe von Ammoniumnitrat, Calciumnitrat, Calciumammoniumnitrat, Natriumnitrat, Ammoniumsulfatnitrat, Kaliumammoniumnitrat, Ammoniumphosphat wie Monoammoniumphosphat (MAP) und Diammoniumphosphat (DAP), Calciumbis(dihydrogenorthophosphat), Superphosphat, Tripelsuperphosphat, Rohphosphat, Kaliumsulfat, Kaliummagnesiumsulfat, Ammoniumsulfat (AS), Harnstoff-Ammoniumsulfat, Harnstoff-Calciumammoniumnitrat, Harnstoff-Ammoniumsulfat, Kaliumchlorid (MOP), Kaliumsulfat (SOP), Harnstoff-Kaliumsalzen (UK), NPK-Düngern mit einer Verbindung auf Harnstoffbasis und Mischungen davon ausgewählt sind.

19. Flüssige Zusammensetzung auf Harnstoffbasis, umfassend eine gelöste Verbindung auf Harnstoffbasis und die flüssige Zusammensetzung nach Anspruch 14, wobei die flüssige Zusammensetzung innig mit der in einem Lösungsmittel, vorzugsweise in Wasser, gelösten Verbindung auf Harnstoffbasis, die vorzugsweise aus der Gruppe von Harnstoff, Harnstoff-Ammoniumnitrat (UAN), Harnstoff-Calciumnitrat (UCaN) oder Mischungen davon ausgewählt ist, gemischt wird.

20. Verwendung der festen, teilchenförmigen oder flüssigen Zusammensetzung auf Harnstoffbasis nach Ansprüche 17 bis 19 als harnstoffhaltiges Düngemittel.

## Revendications

1. Procédé pour la fabrication d'une composition liquide essentiellement constituée d'un solvant organique du type éther de glycol et d'un inhibiteur d'uréase du type triamide phosphorique, et éventuellement d'un système de colorant, le procédé comprenant au moins l'étape de maintien de la composition liquide essentiellement constituée d'un solvant organique du type éther de glycol et d'un inhibiteur d'uréase du type triamide phosphorique, et éventuellement d'un système de colorant, à une température de maintien qui est au moins au-dessus de la température ambiante mais inférieure à la température de fusion dudit inhibiteur d'uréase du type triamide phosphorique, pendant une période de temps de maintien d'au moins 1 minute.

2. Procédé selon la revendication 1, ladite période de temps de maintien se situant dans la plage entre 1 minute et 2 heures.

3. Procédé selon l'une quelconque des revendications 1 et 2, ladite température de maintien étant maintenue essentiellement constante pendant ladite période de temps de maintien.

4. Procédé selon l'une quelconque des revendications 1 à 3, une agitation ou un traitement ultrasonique étant appliqué(e) pendant ladite période de temps de maintien.

5. Procédé selon l'une quelconque des revendications 1 à 4, la composition liquide essentiellement constituée d'un solvant organique du type éther de glycol et d'un inhibiteur d'uréase du type triamide phosphorique, et éventuellement d'un système de colorant, ne comprenant aucune autre substance qu'un solvant organique du type éther de glycol et un inhibiteur d'uréase du type triamide phosphorique, et éventuellement un système de colorant.

6. Procédé selon l'une quelconque des revendications 1 à 5, l'inhibiteur d'uréase du type triamide phosphorique étant un composé de formule (I) : 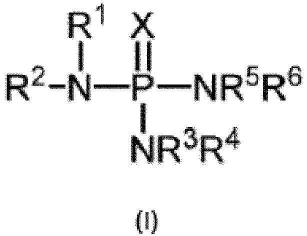
X étant oxygène ou soufre ;
R¹ étant choisi dans le groupe constitué par alkyle, cycloalcényle, aralkyle, aryle, alcényle, alcynyle, et cycloalkyle ; et
R² étant choisi dans le groupe constitué par hydrogène, alkyle, cycloalcényle, aralkyle, aryle, alcényle, alcynyle, et cycloalkyle, ou
R¹ et R² pouvant former ensemble une chaîne alkylène ou alcénylène qui peut éventuellement comporter un ou plusieurs hétéroatomes parmi l'oxygène, l'azote ou le soufre, divalent, complétant une structure cyclique à 4, 5, 6, 7, ou 8 chaînons ; et
R³, R⁴, R⁵ et R⁶ étant individuellement choisis dans le groupe constitué par hydrogène et alkyle possédant 1 à 6 atomes de carbone, et
R¹, R², R³, R⁴, R⁵ et R⁶, lorsqu'ils ne sont pas hydrogène, pouvant chacun être éventuellement substitués par un ou plusieurs groupes choisis dans le groupe constitué par trihalogénométhyle, naphtoxy, alkyle, halogène, arylmercapto, phénoxy, phényle, nitro, cyano, amino, alkylamino, dialkylamino, alcoxy, mercapto, alkylmercapto, alkylcarbonyle, arylamino, arylcarbonyle, alcoxycarbonyle, carboxy, diarylamino, et carbonamide.

7. Procédé selon l'une quelconque des revendications 1 à 6, l'inhibiteur d'uréase étant le triamide N-(n-butyl)thiophosphorique (nBTPT).

8. Procédé selon l'une quelconque des revendications 1 à 7, la quantité dudit inhibiteur d'uréase du type triamide phosphorique se situant dans la plage de 1 à 30 % en poids, par rapport au poids total de ladite composition liquide.

9. Procédé selon l'une quelconque des revendications 1 à 8, le solvant organique du type éther de glycol étant un composé de formule (II) 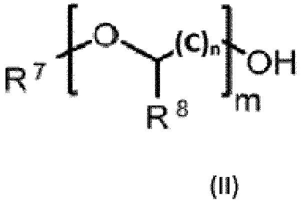
R⁷ étant C₁₋₆-alkyle ;
R⁸ étant hydrogène ou C₁₋₆-alkyle ;
n étant 1 à 2 ; et
m étant 1 à 4.

10. Procédé selon la revendication 9, le solvant organique étant choisi dans le groupe constitué par le diéthylèneglycol monométhyléther (DEGMME), le diéthylèneglycol monoéthyléther (DEGMEE), le diéthylèneglycol monopropyléther (DEGMPE), le diéthylèneglycol monobutyléther (DEGMBE), le dipropylèneglycol monométhyléther (DPGMME), le dipropylèneglycol monoéthyléther (DPGMEE), le dipropylèneglycol monopropyléther (DPGMPE), le dipropylèneglycol monobutyléther (DPGMBE), le triéthylèneglycol monométhyléther (TEGMME), le triéthylèneglycol monoéthyléther (TEGMEE), le triéthylèneglycol monopropyléther (TEGMPE), le triéthylèneglycol monobutyléther (TEGMBE), et des combinaisons correspondantes, préférablement le solvant organique étant le diéthylèneglycol monobutyléther (DEGMBE).

11. Procédé selon l'une quelconque des revendications 1 à 10, la quantité dudit solvant organique du type éther de glycol se situant dans la plage entre 55 et 99 % en poids, par rapport au poids total de ladite composition liquide.

12. Procédé selon l'une quelconque des revendications 1 à 11, comprenant en outre une étape dans laquelle une quantité d'un système de colorant est ajoutée à la composition liquide essentiellement constituée d'un solvant organique du type éther de glycol et d'un inhibiteur d'uréase du type triamide phosphorique.

13. Procédé selon la revendication 12, la quantité dudit système de colorant se situant dans la plage entre 0 et 1,0 % en poids.

14. Composition liquide essentiellement constituée de diéthylèneglycol monobutyléther (DEGMBE) en tant qu'un solvant et 10 à 30 % en poids, en particulier 15 à 25 % en poids, plus particulièrement environ 25 % en poids, par rapport au poids total de la solution liquide, de triamide N-(n-butyl)thiophosphorique (nBTPT), **caractérisée en ce que** le nBTPT possède une température de cristallisation dans la composition liquide inférieure à -12 °C.

15. Composition liquide selon la revendication 14, le nBTPT possédant une température de cristallisation dans la composition liquide inférieure à -14 °C, plus préférablement inférieure à -16 °C, encore plus préférablement inférieure à -18 °C, encore plus préférablement inférieure à -20 °C, encore plus préférablement inférieure à -22 °C, encore plus préférablement inférieure à -24 °C, et le plus préférablement inférieure à -26 °C.

16. Composition particulaire solide à base d'urée, comprenant un composé particulaire solide à base d'urée et la composition liquide selon la revendication 14 ou 15, la composition liquide formant au moins partiellement un revêtement sur au moins une partie des particules comprenant le composé à base d'urée, ou étant incorporée à l'intérieur d'au moins une partie des particules comprenant le composé à base d'urée.

17. Composition particulaire solide à base d'urée selon la revendication 16, le composé à base d'urée étant choisi dans le groupe de l'urée, de l'urée sulfate de calcium (UCas), de l'urée nitrate de calcium (UCaN), de l'urée nitrate de magnésium (UMgN), de l'urée phosphate de calcium (UCaP), de l'urée phosphate de magnésium (UMgP), de l'urée superphosphate (USP), de l'urée nitrate d'ammonium et de calcium (UCAN), de l'urée sulfate d'ammonium (UAS), de l'urée phosphate d'ammonium (UAP), de l'urée sels de potassium (UK), d'engrais NPK composé à base d'urée, et des mélanges correspondants.

18. Composition particulaire solide à base d'urée selon la revendication 16, la composition étant un mélange physique du composé à base d'urée sous forme particulaire et d'un ou plusieurs composants choisis dans le groupe des nitrates, des phosphates, des sulfates et des chlorures sous forme particulaire, choisis dans le groupe de : nitrate d'ammonium, nitrate de calcium, nitrate de calcium et ammonium, nitrate de sodium, nitrate sulfate d'ammonium, nitrate d'ammonium et de potassium, phosphate d'ammonium, tel que phosphate de monoammonium (MAP) et phosphate de diammonium (DAP), bis(dihydrogénoorthophosphate) de calcium, superphosphate, superphosphate triple, roche phosphatée, sulfate de potassium, sulfate de magnésium et de potassium, sulfate d'ammonium (AS), urée sulfate d'ammonium, urée nitrate de calcium et ammonium, urée sulfate d'ammonium, chlorure de potassium (MOP), sulfate de potassium (SOP), urée sels de potassium (UK), engrais NPK composé à base d'urée, ou mélanges correspondants.

19. Composition liquide à base d'urée, comprenant un composé dissous à base d'urée et la composition liquide selon la revendication 14, ladite composition liquide étant intimement mélangée avec le composé à base d'urée, préférablement choisi dans le groupe de l'urée, de l'urée nitrate d'ammonium (UAN), de l'urée nitrate de calcium (UCaN), ou des mélanges correspondants, dissous dans un solvant, préférablement dans de l'eau.

20. Utilisation de la composition liquide ou particulaire solide, à base d'urée, selon revendications 17 à 19 en tant qu'engrais contenant de l'urée.
